# EUROPÄISCHE PATENTSCHRIFT

(11) **EP 0 958 155 B1**
(45) Veröffentlichungstag und Bekanntmachung des Hinweises auf die Patenterteilung: **02.10.2002**
(21) Anmeldenummer: 98965575.8
(22) Anmeldetag: 17.11.1998
(51) Int. Cl.: B60H 1/00

(54) **MAGNETVENTIL FÜR EINE FLÜSSIGKEITSGEREGELTE HEIZ- UND/ODER KÜHLANLAGE**
MAGNETIC VALVE FOR A LIQUID-REGULATED HEATING AND/OR COOLING INSTALLATION
VANNE ELECTROMAGNETIQUE POUR UNE INSTALLATION DE CHAUFFAGE ET/OU DE REFROIDISSEMENT REGULEE PAR UN FLUIDE

(30) Priorität: 06.12.1997 DE 19754257
(43) Veröffentlichungstag der Anmeldung: 24.11.1999
(73) Patentinhaber: ROBERT BOSCH GMBH, 70442 Stuttgart (DE)
(72) Erfinder: FALCH, Peter, (DE); HESS, Juergen, D-76534 Baden-Baden (DE); PFETZER, Johannes, D-77815 Buehl (DE); HEIER, Christoph, D-76473 Iffezheim (DE); REEB, Georg, D-77815 Buehl-Eisental (DE); FELLMANN, Heinrich, D-77830 Buehlertal (DE)
(86) Internationale Anmeldenummer: DE9803388
(87) Internationale Veröffentlichungsnummer: WO99029527

(56) Entgegenhaltungen:
- DE-A1- 3 416 465
- DE-C1- 19 537 067
- FR-A1- 2 580 557
- US-A- 5 443 241

## Beschreibung

### Stand der Technik

Die Erfindung geht aus von einem Magnetventil für eine flüssigkeitsgeregelte Heiz- und/oder Kühlanlage mit den Merkmalen des Oberbegriffs von Anspruch 1.

Derartige Magnetventile werden insbesondere bei flüssigkeitsgeregelten Wärmetauschern für Heiz- und/oder Klimaanlagen in Kraftfahrzeugen verwendet. Sie können in Abhängigkeit von Temperaturen in der Heiz- und/oder Klimaanlage oder einem Fahrgastraum getaktet angesteuert werden, wobei durch den mittleren Zeitquerschnitt im wesentlichen der Durchfluß bestimmt wird. Durch den Flüssigkeitsdruck und/oder eine Ventilfeder wird das Ventilglied des Magnetventils geöffnet und durch eine erregte Magnetspule des Magnetventils geschlossen, indem sie auf einen mit dem Ventilschaft verbundenen Anker wirkt. Der Raum, in dem der Anker angeordnet ist, ist nicht hermetisch abgedichtet, sondern mit Flüssigkeit gefüllt. Dadurch soll die Bewegung des Ankers hydraulisch gedämpft werden, um ein abruptes Schließen und damit verbundene Druckstöße im Flüssigkeitssystem zu vermeiden. Ferner werden Geräusche sowie Verschleiß verhindert, die entstehen, wenn das Ventilglied ungedämpft auf den Ventilsitz aufschlägt. Die Dämpfungswirkung ist jedoch durch Gasblasen, insbesondere Luftblasen, stark beeinträchtigt, die sich in dem Ankerraum ansammeln, z.B. beim Befüllen des Systems. Ferner können die Magnetventile als Umschaltventile eingesetzt werden, die den Kühlmittelstrom von einer Brennkraftmaschine in der einen Schaltstellung kurzschließen und in einer zweiten Schaltstellung über einen Wärmetauscher leiten.

Es ist aus der DE 195 370 67 C1 bekannt bei einem Magnetventil, das in einer Vorlaufleitung eines Heizungswärmetauschers angeordnet ist, unter Ausnutzung des Druckgefälles zwischen der Vorlaufleitung und der Rücklaufleitung den Ankerraum des Magnetventils zu durchströmen, um die Luftblasen aus dem Ankerraum zu entfernen und die damit verbundenen Nachteile zu vermeiden. Hierzu ist eine Entlüftungsleitung zwischen dem Ankerraum und der Rücklaufleitung vorgesehen, während über einen Ringspalt zwischen dem Anker und der Spule des Magnetventils Flüssigkeit von einer Vorlaufleitung in die Entlüftungsleitung strömt und verhindert, daß sich im Ankerraum Luftblasen ansammeln.

Es ist ferner, aus der gattungsgemäßen DE-PS 34 16 465 bei einem Magnetventil bekannt, einen Ankerraum über einen axialen Kanal in einem Ankerschaft mit einem Leitungsabschnitt zu verbinden, der auf der dem Ankerraum zugewandten Seite des Ventilglieds liegt. Durch die Pumpwirkung des Ankers während der Ventilbetätigung soll Luft aus dem Ankerraum verdrängt und Flüssigkeit angesaugt werden. Wegen der Kompressibilität der Luft findet allerdings nicht immer ein ausreichender Flüssigkeitsaustausch zwischen dem Ankerraum und dem Leitungsabschnitt statt und die Luft kann unter Umständen im oberen, ringförmigen Teil des Ankerraums eingeschlossen bleiben.

Das Ventilglied ist im Ventilschaft axial begrenzt verschiebbar geführt. Durch den Flüssigkeitsdruck wird es in Öffnungsstellung gegen einen Anschlag am Ventilschaft verschoben. Wird die Magnetspule des Magnetventils erregt, wird der am Ventilschaft befestigte Anker angezogen und der Ventilschaft drückt das Ventilglied gegen einen Ventilsitz. Trifft das Ventilglied ungedämpft auf den Ventilsitz auf, verursacht es aufgrund des Auftreffimpulses Geräusche und erhöht den Verschleiß.

### Vorteile der Erfindung

Nach der Erfindung sind an der dem Ventilglied zugewandten Seite des Ventilschafts Mittel vorgesehen, die die Geschwindigkeit des Ventilschafts beim Schließen des Ventilglieds verzögern. Diese können elastische Elemente sein, die zwischen dem Ventilglied und dem Ventilschaft geschaltet sind und die Masse des Ventilschafts mit dem Anker von der Masse des Ventilglieds entkoppeln. Dadurch wird der Auftreffimpuls des Ventilglieds und damit der Verschleiß sowie das Schließgeräusch stark verringert.

Als elastische Elemente können Federn in geeigneter Ausführung verwendet werden, z.B. Schraubenfedern, Blattfedern, Tellerfedern, Federn aus Gummi, Kunststoff usw.. Sie sind einfach, funktionssicher und wartungsfrei.

Das Ventilglied ist gegenüber dem Ventilschaft entsprechend dem Federweg axial begrenzt verschiebbar geführt. Durch das elastische Element wird die kinetische Energie des Ventilschafts und des Ankers gespeichert und anschließend durch das Eigendämpfungsverhalten des Magnetventils abgebaut.

Das Ventilglied wird vom Ventilschaft in der Schließstellung fest auf den Ventilsitz gedrückt, so daß die Schließfunktion gewährleistet ist, während das Ventilglied in Öffnungsstellung durch die Ventilfeder vom Ventilsitz abgehoben wird. Das elastische Element kann aber auch so stark ausgelegt werden, daß das Ventilglied in Schließstellung durch das elastische Element sicher gegen den Ventilsitz gedrückt wird. Bei einer anderen Varianten kann das elastische Element so ausgelegt sein, daß das Schließglied vom Flüssigkeitsdruck in die Öffnungsstellung bewegt wird und nur bei erregter Magnetspule gegen den Ventilsitz gedrückt wird. Eine weitere Variante besteht darin, daß das elastische Element erst nach einem vorgegebenen Weg des Ventilglieds zur Wirkung gelangt und somit durch die Flüssigkeitsströmung geöffnet wird, wenn die Magnetspule nicht erregt ist, jedoch über das elastische Element gegen den Ventilsitz gedrückt wird, sobald die Magnet-spule erregt ist.

Die Geschwindigkeit des Ventilschafts kann auch durch eine Dämpfungseinrichtung verringert werden, die am Ventilschaft bzw. am Ventilglied angreift. Diese verhindert nicht nur, daß das Ventilglied bzw. der Ventilschaft nach dem Aufsetzen des Ventilglieds nachschwingen, sondern bremst bereits die Geschwindigkeit von Anker, Ventilschaft und Ventilglied während der Ventilbewegung.

Da die Mittel zum Verzögern des Ventilschafts an der dem Ventilglied zugewandten Seite angeordnet sind, kann auf die Dämpfungswirkung im Ankerraum und seine Durchströmung weitgehend verzichtet werden. Wenn der Ankerraum nicht von Kühlmittel durchflossen wird, besteht keine Gefahr mehr, daß sich Abrieb und Schmutz im Ankerraum und am Anker sowie am Elektromagneten ablagern und sowohl die magnetischen als auch die mechanischen Eigenschaften des Magnetventils beeinträchtigen.

Die Dämpfungseinrichtung wird in einfacher Weise durch eine am Ventilschaft befestigte Scheibe gebildet, die sich in einem mit Flüssigkeit gefüllten Teil des Ventilgehäuses bewegt. In manchen Fällen mag es ausreichen, wenn die Dämpfungsscheibe in einem Durchflußkanal angeordnet ist, jedoch kann die Wirkung verbessert werden, wenn sie mit einem geringen Spiel zu einer separaten Dämpfungskammer geführt ist, die zum Ablaufkanal hin durch eine Membrandichtung abgedichtet ist. Bei der Bewegung der Dämpfungsscheibe wird Flüssigkeit über einen Ringspalt von einer Seite der Dämpfungsscheibe zur anderen verdrängt. Das Dämpfungsverhalten kann durch zusätzliche Drosselbohrungen in der Dämpfungsscheibe abgestimmt werden.

Damit durch die Masse der Dämpfungsscheibe die bewegten Massen des Magnetventils nicht wesentlich erhöht werden, ist es zweckmäßig, die Scheibe dünn auszubilden und aus einem Leichtbauwerkstoff, z.B. Leichtmetall oder Kunststoff, herzustellen. Diese Werkstoffe beeinflussen außerdem nicht das magnetische Verhalten des Magnetventils.

Um sicherzustellen, daß die Dämpfungskammer stets mit Flüssigkeit gefüllt ist, kann gemäß einer Ausgestaltung der Erfindung über eine Drosselstelle Flüssigkeit zwischen der Dämpfungskammer und dem Ablaufkanal ausgetauscht werden.

### Zeichnung

In der Zeichnung sind Ausführungsbeispiele der Erfindung dargestellt. In der Beschreibung und in den Ansprüchen sind zahlreiche Merkmale im Zusammenhang dargestellt und beschrieben. Der Fachmann wird die Merkmale zweckmäßigerweise auch einzeln betrachten und zu sinnvollen Kombinationen zusammenfassen.

Es zeigen:
- Fig. 1: einen Querschnitt durch ein erfindungsgemäßes Magnetventil in druckloser Ruhestellung und
- Fig. 2: eine Variante mit einer Dämpfungsscheibe.

### Beschreibung der Ausführungsbeispiele

Das Magnetventil 10 ist in der Regel zwischen einer Brennkraftmaschine und einem Heizungswärmetauscher angeordnet. Es besitzt einen Zulaufkanal 12, der mit der Brennkraftmaschine verbunden ist und einen Ablaufkanal 14, der mit dem Heizungswärmetauscher verbunden ist. Zwischen den Kanälen 12, 14 ist ein Ventilglied 18 vorgesehen, das über einen Ventilkegel 20 mit einem Ventilsitz 22 zusammenwirkt und in einer ersten Schaltstellung die Verbindung zwischen dem Zulaufkanal 12 und dem Ablaufkanal 14 herstellt und in einer zweiten Schaltstellung sperrt.

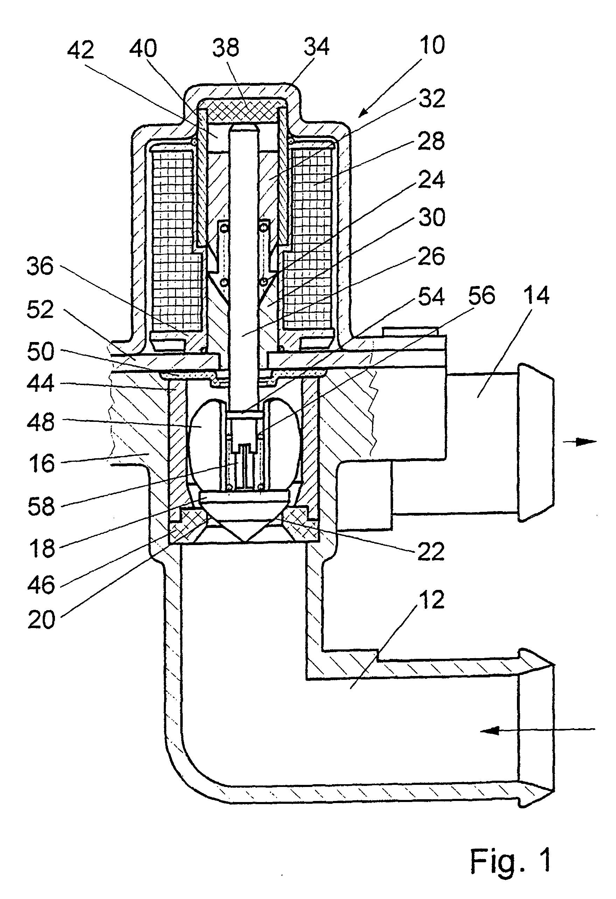

Das Ventilglied 18 ist in einem Ventilschaft 26 mittels eines Führungszapfens 58 begrenzt axial verschiebbar geführt (Fig. 1). Auf dem Ventilschaft 26 ist ein Anker 32 befestigt, der mit einer Magnetspule 28 zusammenwirkt und in einem Ankerraum 42 durch eine Führungsbüchse 40 axial verschiebbar geführt ist. Ein Anschlag 38, an dem der Ventilschaft 26 in geöffneter Stellung des Magnetventils 10 unter der Kraft einer Ventilfeder 24 anliegt, verschließt die Führungsbüchse 40 und damit den Ankerraum 42 stirnseitig. Der Anschlag 38 wird zweckmäßigerweise aus einem dämpfenden Kunststoffmaterial hergestellt.

Der Flüssigkeitsdruck im Zulaufkanal 12 verschiebt das Ventilglied 18 in eine geöffnete Stellung, solange die Magnetspule 28 nicht erregt ist. Wenn die Magnetspule 28 erregt wird, zieht ein Magnetkern 30, der mit einem Rückschlußjoch 36 in Verbindung steht, den Anker 32 entgegen der Kraft der Ventilfeder 24 und dem Flüssigkeitsdruck im Zulaufkanal 12 an und das Ventilglied 18 verschließt die Verbindung zwischen dem Zulaufkanal 12 und dem Ablaufkanal 14. Zwischen dem Anker 32 und der Führungsbüchse 40 sowie dem Ventilschaft 26 und dem Magnetkern 30 sind für die freie Bewegung des Ankers 32 und des Ventilschafts 26 Bewegungsspalte vorgesehen.

Ein elastisches Element in Form einer Schraubenfeder 56 umgibt den Führungszapfen 58 und den Ventilschaft 26 und gelangt nach einem vorgegebenen Weg des Ventilglieds an einem Bund 54 des Ventilschafts zur Anlage und damit zur Wirkung. Somit wirkt das Ventilglied 18 als Rückschlagventil, wenn die Magnetspule nicht erregt ist. Die Feder 56 kann hierbei auf die für die Massenkräfte optimale Federsteifigkeit ausgelegt werden. Bei erregter Magnetspule 28 wird das Ventilglied 18 über die Feder 56 oder unmittelbar vom Ventilschaft 26 gegen den Ventilsitz 22 gedrückt.

Die Feder 56 kann sich auch bereits am Bund 54 abstützen, wenn die Magnetspule nicht erregt ist. In diesem Fall wirkt das Ventilglied 18 als Druckventil, das öffnet, sobald der Flüssigkeitsdruck im Zulaufkanal 12 auf das Ventilglied 18 die Kraft der Feder 56 übersteigt.

Anstelle der dargestellten Schraubenfeder 56 können andere Federarten, z.B. Blattfedern, Tellerfedern oder elastische Elemente aus Gummi oder Kunststoff verwendet werden. Die elastischen Elemente sind so ausgelegt, daß sie einerseits die Schließfunktion des Ventilglieds 18 nicht beeinträchtigen und anderseits eine ausreichende Entkopplung zwischen dem Ventilglied 18 und dem Ventilschaft 26 zulassen.

Die Magnetspule 28 befindet sich in einem Magnettopf 34, der auf einem Ventilgehäuse 16 über eine Montageplatte 52 befestigt ist. In das Ventilgehäuse 16 ist ein Ventilsitzgehäuse 44 mit einem Ventilsitzring 46 eingesetzt. Das Ventilsitzgehäuse 44 hat einen Verbindungskanal 48 zum Ablaufkanal 14. Zwischen dem Ventilsitzgehäuse 44 und der Montageplatte 52 ist eine Membrandichtung 50 angeordnet, die den Ventilschaft 26 dichtend umgibt und das Ventilsitzgehäuse 44 zum Magnettopf 34 hin abdichtet (Fig. 1).

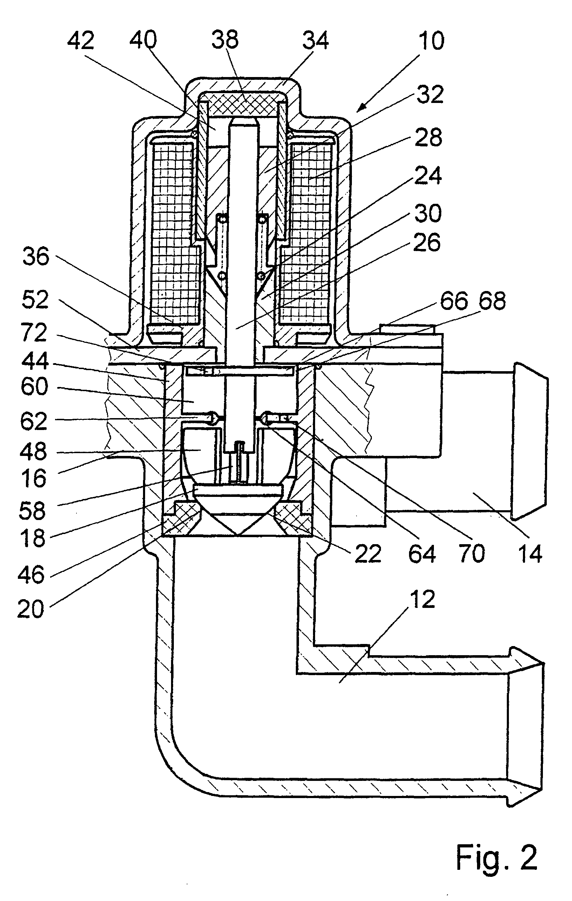

Bei der Ausführung nach Fig. 2 ist auf dem Ventilschaft 26 eine Dämpfungsscheibe 66 fest angeordnet, die sich in einer mit Flüssigkeit gefüllten Dämpfungskammer 60 bewegt. Während der Schließbewegung wird Flüssigkeit über einen Ringspalt 68 von der dem Ventilglied 18 zugewandten Seite der Dämpfungsscheibe 66 zur gegenüberliegenden gefördert und beim Öffnen des Ventils in umgekehrter Richtung. Zum Abstimmen der Dämpfungswirkung sind in der Dämpfungsscheibe 66 Drosselbohrungen 72 vorgesehen.

Die Dämpfungskammer 60 wird zum Ventilglied 18 hin durch eine Wand 62 begrenzt, die zum Ventilschaft 26 eine Membrandichtung 64 aufweist. Um zu gewährleisten, daß die Dämpfungskammer 60 stets mit Flüssigkeit gefüllt ist, sind zwischen der Dämpfungskammer 60 und einem Verbindungskanal 48 Drosselstellen 70 vorgesehen.

Die elastischen Elemente nach Fig. 1 und die Dämpfungseinrichtung nach Fig. 2 können einzeln oder in Kombination angewandt werden.

## Patentansprüche

1. Magnetventil (10) für eine flüssigkeitsgeregelte Heizund/oder Kühlanlage mit einem mindestens einen Zulaufkanal (12) und mindestens einen Ablaufkanal (14) aufweisenden Ventilgehäuse (16) und einem elektromagnetisch geschalteten Ventilglied (18), das die Verbindung zwischen dem Zulaufkanal (12) und dem Ablaufkanal (14) in einer ersten Schaltstellung herstellt und in einer zweiten Schaltstellung sperrt und mit einem Ventilschaft (26) verbunden ist, auf dem ein Anker (32) befestigt ist, **dadurch gekennzeichnet, daß** an der dem Ventilglied (18) zugewandten Seite des Ventilschafts (26) Mittel vorgesehen sind, um die Geschwindigkeit des Ventilschafts (26) beim Schließen des Ventilglieds (18) zu verzögern.

2. Magnetventil (10) nach Anspruch 1, **dadurch gekennzeichnet, daß** zwischen dem Ventilglied (18) und dem Ventilschaft (26) ein elastisches Element (56) geschaltet ist.

3. Magnetventil (10) nach einem der vorhergehenden Ansprüche, **dadurch gekennzeichnet, daß** das Ventilglied (18) mittels eines Führungszapfens (58) im Ventilschaft (26) begrenzt axial verschiebbar geführt ist, wobei das elastische Element den Führungszapfen (58) und/oder den Ventilschaft umgibt.

4. Magnetventil (10) nach einem der vorhergehenden Ansprüche, **dadurch gekennzeichnet, daß** das elastische Element eine Feder (56) ist.

5. Magnetventil (10) nach einem der vorhergehenden Ansprüche, **dadurch gekennzeichnet, daß** das elastische Element erst nach einem vorgegebenen Weg des Ventilglieds (18) zur Wirkung gelangt.

6. Magnetventil (10) nach einem der vorhergehenden Ansprüche, **dadurch gekennzeichnet, daß** der Ventilschaft (26) oder das Ventilglied (18) mit einer Dämpfungseinrichtung versehen ist.

7. Magnetventil (10) nach Anspruch 6, **dadurch gekennzeichnet, daß** die Dämpfungseinrichtung eine am Ventilschaft (26) oder Ventilglied (18) befestigte Dämpfungsscheibe (66) ist, die mit geringem Spiel zum Ventilgehäuse (16) geführt ist.

8. Magnetventil (10) nach Anspruch 7, **dadurch gekennzeichnet, daß** die Dämpfungsscheibe (66) in einer separaten Dämpfungskammer (60) des Ventilgehäuses (16) untergebracht ist.

9. Magnetventil (10) nach Anspruch 8, **dadurch gekennzeichnet, daß** die Dämpfungskammer (60) zum Ablaufkanal (14) durch eine Membrandichtung (64) abgedichtet ist.

10. Magnetventil (10) nach Anspruch 8 oder 9, **dadurch gekennzeichnet, daß** die Dämpfungskammer (60) über eine Drosselstelle (70) mit dem Ablaufkanal (14) verbunden ist.

11. Magnetventil (10) nach Anspruch 6 oder 7, **dadurch gekennzeichnet, daß** die Dämpfungsscheibe (66) aus Leichtmetall oder Kunststoff hergestellt ist.

## Claims

1. Solenoid valve (10) for a liquid-controlled heating and/or cooling system, having a valve body (16) with at least one inlet port (12) and at least one outlet port (14), and an electromagnetically switched valve member (18) which makes the connection between the inlet port (12) and the outlet port (14) in a first control position and blocks it in a second control position and is connected to a valve stem (26) on which an armature (32) is fastened, **characterized in that** provided on the side of the valve stem (26) facing the valve member (18) are means for reducing the speed of the valve stem (26) when the valve member (18) closes.

2. Solenoid valve (10) according to Claim 1, **characterized in that** an elastic element (56) is connected between the valve member (18) and the valve stem (26).

3. Solenoid valve (10) according to one of the preceding claims, **characterized in that** the valve member (18) is guided with limited axial displaceability by means of a guide pin (58) in the valve stem (26), the elastic element surrounding the guide pin (58) and/or the valve stem.

4. Solenoid valve (10) according to one of the preceding claims, **characterized in that** the elastic element is a spring (56).

5. Solenoid valve (10) according to one of the preceding claims, **characterized in that** the elastic element starts to act only after a prescribed path of the valve member (18).

6. Solenoid valve (10) according to one of the preceding claims, **characterized in that** the valve stem (26) or the valve member (18) is provided with a damping device.

7. Solenoid valve (10) according to Claim 6, **characterized in that** the damping device is a damping disc (66) which is fastened on the valve stem (26) or the valve member (18) and is guided with little play relative to the valve body (16).

8. Solenoid valve (10) according to Claim 7, **characterized in that** the damping disc (66) is accommodated in a separate damping chamber (60) of the valve body (16).

9. Solenoid valve (10) according to Claim 8, **characterized in that** the damping chamber (60) is sealed with respect to the outlet port (14) by a diaphragm seal (64).

10. Solenoid valve (10) according to Claim 8 or 9, **characterized in that** the damping chamber (60) is connected to the outlet port (14) via a throttling point (70).

11. Solenoid valve (10) according to Claim 6 or 7, **characterized in that** the damping disc (66) is produced from light metal or plastic.

## Revendications

1. Electrovanne (10) pour une installation de chauffage et/ou de refroidissement, à régulation de liquide comprenant un boîtier de vanne (16) avec au moins un canal d'alimentation (12) et au moins un canal de sortie (14), ainsi qu'un organe de soupape (18) à commutation électromagnétique qui libère la communication entre le canal d'entrée (12) et le canal de sortie (14) pour une première position de commutation et ferme cette communication dans une seconde position de commutation, ainsi qu'une tige de soupape (26) sur laquelle est fixé un induit (32),
**caractérisée en ce que**
le côté de la tige de soupape (26) tourné vers l'organe de soupape (18) comprend des moyens pour ralentir la vitesse de la tige (26) à la fermeture de l'organe de soupape (18).

2. Electrovanne (10) selon la revendication 1,
**caractérisée par**
un élément élastique (56) entre l'organe de soupape (18) et la tige de soupape (26).

3. Electrovanne (10) selon l'une des revendications précédentes,
**caractérisée en ce que**
l'organe de soupape (18) est guidé à l'aide d'un téton de guidage (28) en coulissement axial de manière limitée dans la tige de soupape (26), l'élément élastique entourant le téton de guidage (58) et/ou la tige de soupape.

4. Electrovanne (10) selon l'une des revendications précédentes,
**caractérisée en ce que**
l'élément élastique est un ressort (56).

5. Electrovanne (10) selon l'une des revendications précédentes,
**caractérisée en ce que**
l'élément élastique agit seulement après une course prédéterminée de l'organe de soupape (18).

6. Electrovanne (10) selon l'une des revendications précédentes,
**caractérisée en ce que**
la tige de soupape (26) ou l'organe de soupape (18) comporte une installation d'amortissement.

7. Electrovanne (10) selon la revendication 6,
**caractérisée en ce que**
l'installation d'amortissement est une rondelle d'amortissement (66) fixée à la tige de soupape (26) ou à l'organe de soupape (18).

8. Electrovanne (10) selon la revendication 7,
**caractérisée en ce que**
la rondelle d'amortissement (66) est logée dans une chambre d'amortissement (60) du boîtier de soupape (16).

9. Electrovanne (10) selon la revendication 8,
**caractérisée en ce que**
la chambre d'amortissement (60) est fermée de manière étanche par un joint à membrane (64) par rapport au canal de sortie (14).

10. Electrovanne (10) selon la revendication 8 ou 9,
**caractérisée en ce que**
la chambre d'amortissement (60) est reliée par un point d'étranglement (70) au canal de sortie (14).

11. Electrovanne (10) selon les revendications 6 ou 7,
**caractérisée en ce que**
la rondelle d'amortissement (66) est en métal léger ou en matière plastique.
